# EUROPÄISCHE PATENTANMELDUNG

(11) **EP 1 927 770 A2**
(43) Veröffentlichungstag der Anmeldung: **04.06.2008**
(21) Anmeldenummer: 07021627.0
(22) Anmeldetag: 07.11.2007
(51) Int. Cl.: F16C 29/04, F16C 29/06, F16C 29/00

(54) **Lineareinheit**

(30) Priorität: 29.11.2006 DE 102006056516
(71) Anmelder: Isel Automation GmbH & Co. KG, 36466 Dermbach (DE)
(72) Erfinder: Isert, Hugo, 36466 Dermbach (DE); Scheich, Hubert, 36132 Eiterfeld (DE)
(74) Vertreter: Buchhold, Jürgen

(57) **Zusammenfassung**

Die vorliegende Erfindung betrifft eine Lineareinheit mit mindestens einer Führungsschiene 12, mindestens einem auf der Führungsschiene 12 verfahrbaren Schlitten 40, der im Wesentlichen u-förmig ausgebildet ist und einen Querträgerabschnitt 42 und zwei seitliche Schenkelabschnitte 44 umfasst, wobei die Abschnitte 42, 44 die Führungsschiene 12 teilweise umschließen, einer zwischen der Führungsschiene 12 und dem Schlitten 40 angeordneten spielfreien Lagerung, die mindestens zwei Lagerelemente und mindestens zwei an der Führungsschiene 12 ausgebildete Lagerflächen 14 zur Abstützung und Führung der Lagerelemente aufweist, und Mitteln zur spielfreien Einstellung der Lagerung.

Erfindungsgemäß sind die Lagerelemente derart ausgestattet, dass sie gegenüber der Führungsschiene 12 und dem Schlitten 40 zur spielfreien Einstellung der Lagerung drehbar sind.

Die erfindungsgemäß drehbare Ausgestaltung der Lagerelemente sorgt dafür, dass sich die Lagerelemente bei der Einstellung der Lagerung selbsttätig gegenüber den entsprechenden Lagerflächen 14 ausrichten.

## Beschreibung

Die vorliegende Erfindung betrifft eine Lineareinheit mit einer Führungsschiene bzw. einem Trägerprofil, einem auf der Führungsschiene bzw. dem Trägerprofil verfahrbaren Schlitten, einer zwischen der Führungsschiene bzw. dem Trägerprofil und dem Schlitten angeordneten spielfreien Lagerung, die Lagerelemente und an der Führungsschiene bzw. dem Trägerprofil ausgebildete Lagerflächen zur Abstützung und Führung der Lagerelemente aufweist, und Mitteln zur spielfreien Einstellung der Lagerung.

In zahlreichen industriellen Anwendungsbereichen finden Lineareinheiten der oben genannten Art Verwendung, zumal sie exakte Translationsbewegungen ermöglichen. Der Aufbau bekannter Lineareinheiten ist meist recht kompliziert und durch eine Vielzahl einzelner Bauteile realisiert. Entsprechend sind die Herstellung und die Montage solcher Lineareinheiten sehr zeitaufwendig und teuer. Auch Wartungsarbeiten, wie beispielsweise der Austausch verschlissener Bauteile der Lagerung, sind meist sehr zeit- und damit kostenintensiv.

Der vorliegenden Erfindung liegt daher die Aufgabe zugrunde, diese und weitere Nachteile des Standes der Technik zu überwinden und eine Lineareinheit der oben genannten Art zu schaffen, die mit einfachen Mitteln kostengünstig aufgebaut ist und eine ebenso präzise wie dauerhaft zuverlässige Führung gewähneistet. Sie soll schnell und rationell zu fertigen und zu montieren sein. Ferner soll ein rascher und unkomplizierter Austausch von Bauteilen möglich sein.

Diese Aufgabe wird erfindungsgemäß mit den im Patentanspruch 1 angegebenen Merkmalen gelöst. Bevorzugte Ausführungsformen der Erfindung sind Gegenstand der Unteransprüche.

Die erfindungsgemäße Lineareinheit umfasst mindestens eine Führungsschiene, mindestens einen auf der Führungsschiene verfahrbaren Schlitten, der im Wesentlichen u-förmig ausgebildet ist und einen Querträgerabschnitt und zwei seitliche Schenkelabschnitte aufweist, wobei die Abschnitte die Führungsschiene teilweise umschließen, eine zwischen der Führungsschiene und dem Schlitten angeordnete spielfreie Lagerung, die mindestens zwei Lagerelemente und mindestens zwei an der Führungsschiene ausgebildete Lagerflächen zur Abstützung und Führung der Lagerelemente aufweist, und Mittel zur spielfreien Einstellung der Lagerung.

Die Lagerelemente sind dabei erfindungsgemäß derart ausgestaltet, dass sie gegenüber der Führungsschiene und dem Schlitten zur spielfreien Einstellung der Lagerung drehbar sind.

Der erfindungsgemäßen Lineareinheit liegt damit ein einfacher und kostengünstiger Aufbau zugrunde, der eine rasche und schnelle Anpassung der Lineareinheit an die unterschiedlichsten kundenseitigen Anforderungen ermöglicht.

Ferner sorgt die erfindungsgemäß drehbare Ausgestaltung der Lagerelemente dafür, dass sich die Lagerelemente bei der Einstellung der Lagerung selbsttätig gegenüber den entsprechenden Lagerflächen ausrichten, so dass die Lagerelemente stets optional auf den Lagerflächen aufliegen. Der Schlitten ist spielfrei auf der Führungsschiene gelagert und kann damit präzise Bewegungen ausführen.

Weiter liegt der Erfindung die Aufgabe zugrunde, eine Lineareinheit mit einer deutlich reduzierten Geräuschentwicklung bereitzustellen.

Darüber hinaus liegt der Erfindung die Aufgabe zugrunde, eine Lineareinheit mit einem Positionserfassungsmodul für den Schlitten der Lineareinheit bereitzustellen.

Die seitlichen Schenkelabschnitte des Schlittens weisen mindestens eine sich über die gesamte Länge des Schlittens erstreckende Aufnahme mit einem im Wesentlichen kreisrunden oder halbkreisrunden Querschnitt auf. An der Innenseite des jeweiligen Schenkelabschnitts ist eine Öffnung in der Aufnahme vorgesehen, die sich ebenfalls über die gesamte Länge des Schlittens erstreckt, In der Aufnahme ist das erfindungsgemäß gegenüber dem Schlitten und der Führungsschiene drehbar ausgestaltete Lagerelement angeordnet. Das Lagerelement umfasst einen Haltekörper mit einem im Wesentlichen kreisrunden und zur besagten Aufnahme korrespondierenden Querschnitt. Ferner ist das Lagerelement mit mindestens einer Wälzkörperreihe oder mit mindestens einer Laufrolle versehen, die sich über die Öffnung in der Aufnahme gegen eine der Lagerflächen an der Führungsschiene abstützt.

Der Antrieb der erfindungsgemäßen Lineareinheit erfolgt elektromotorisch durch einen eine Translationsbewegung erzeugenden Linearmotor, der einen Spulenkörper und mindestens einen Permanentmagneten aufweist und zwischen der Führungsschiene und dem Schlitten angeordnet ist. Dabei ist der Spulenkörper an dem Querträgerabschnitt des Schlittens befestigt, während der Permanentmagnet in der Führungsschiene angeordnet und fixiert ist und mit dem Spulenkörper einen Luftspalt bildet. Je nach Anforderung kann entweder der Schlitten oder die Führungsschiene den beweglichen Teil der erfindungsgemäßen Lineareinheit bilden.

In einer bevorzugten Ausführungsform der erfindungsgemäßen Lineareinheit, in der der Schlitten als das bewegliche Teil der Lineareinheit konzipiert ist, ist die Führungsschiene unsymmetrisch ausgestaltet und bildet einen sich über die gesamte Länge der Führungsschiene erstreckenden und unsymmetrischen Aufnahmeraum, in den sich der an dem Schlitten befestigte Spulenkörper des Linearmotors erstreckt. Der Permanentmagnet ist dabei in einer Ausnehmung des Sockels der Führungsschiene gegenüber liegend zum Spulenkörper angeordnet.

Durch die unsymmetrische Ausgestaltung der Führungsschiene schließt der Aufnahmeraum erfindungsgemäß einen seitlichen Freiraum ein, in den eine bei einer derartigen Lineareinheit üblicherweise verwendete Energiekette integriert werden kann, die als solche die den Versorgungsstrang - für den Linearmotor und einen Sensor zur Positionserfassung des Schlittens - bildenden flexiblen elektrischen Kabel bei der Hin- und Herbewegung des Schlittens führt und stützt.

Eine derartig innen liegende Anordnung der Energiekette ermöglicht eine deutliche Reduktion der durch die Energiekette bedingten Geräuschentwicklung.

In einer weiteren, bevorzugten Ausführungsform der erfindungsgemäßen Lineareinheit, in der die Führungsschiene als das bewegliche Teil der Lineareinheit konzipiert ist, ist der an dem Querträgerabschnitt des Schlittens befestigte Spulenkörper des Linearmotors außerhalb der Führungsschiene zwischen derselben und dem Schlitten angeordnet. Die Führungsschiene ist dabei zweckmäßigerweise symmetrisch und möglichst kompakt ausgestaltet, zumal dieser Ausführungsform der Erfindung keine sich bewegende Energiekette zugrunde liegt, die zum Zweck der Geräuschreduktion in die Führungsschiene unterzubringen wäre. Die Führungsschiene nimmt lediglich den Permanentmagneten des Linearmotors in einer Ausnehmung auf, die an einer dem Sockel der Führungsschiene gegenüber liegenden Seite derselben angeordnet ist.

Diese Ausführungsform der Erfindung hat den Vorteil, dass das Gewicht des beweglichen Teils der Lineareinheit und somit auch dessen Massenträgheit reduziert wird. Dies wiederum reduziert den für die Bewegung des beweglichen Teils der Lineareinheit benötigten Energieaufwand.

In einer weiteren, bevorzugten Ausführungsform der erfindungsgemäßen Lineareinheit, ist die Führungsschiene ferner mit mindestens einer sich über die gesamte Länge der Führungsschiene erstreckenden Ausnehmung versehen, in der vorzugsweise ein Gewindestab mit einem Trapezgewinde angeordnet ist. Der Gewindestab bildet zusammen mit einem Sensor, der mit dem Schlitten verbunden ist, ein Sensormodul zur Positionserfassung des beweglichen Teils der Lineareinheit.

Im Folgenden werden bevorzugte Ausführungsformen der Erfindung unter Bezugnahme auf die Zeichnungen eingehend erläutert. Es zeigen:
- Fig. 1: eine perspektivische Ansicht einer ersten Ausführungsform der erfindungsgemäßert Lineareinheit,
- Fig. 2: eine Querschnittsansicht der Führungsschiene der in Fig. 1 dargestellten Lineareinheit,
- Fig. 3: eine Querschnittsansicht des Schlittens der in Fig. 1 dargestellten Lineareinheit,
- Fig. 4: eine perspektivische Ansicht des in den Fig. 1 und 3 dargestellten Schlittens mit einer ersten Ausführungsform der Lageremente der Lagerung in Fig. 1 dargestellten Lineareinheit,
- Fig. 5: eine weitere perspektivische Ansicht des in den Fig. 1 und 3 dargestellten Schlittens mit einer zweiten Ausführungsform der Lageremente der Lagerung in Fig. 1 dargestellten Lineareinheit,
- Fig. 6: eine weitere perspektivische Ansicht des in den Fig. 5 dargestellten Schlittens,
- Fig. 7: eine Querschnittsansicht der Fig. 1 dargestellten Lineareinheit,
- Fig. 8: eine Querschnittsansicht einer zweiten Ausführungsform der erfindungsgemäßen Lineareinheit,
- Fig. 9: eine Ansicht einer Führungsschiene einer dritten Ausführungsform der erfindungsgemäßen Lineareinheit,
- Fig. 10: eine Querschnittsansicht einer weiteren Ausführungsform des Schlittens der in Fig. 1 dargestellten Lineareinheit,
- Fig. 11: eine Darstellung einer vierten Ausführungsform der erfindungsgemäßen Lineareinheit, und
- Fig. 12: eine Darstellung einer fünften Ausführungsform der erfindungsgemäßen Lineareinheit.

Gleiche Bezugszeichen beziehen sich nachfolgend auf gleiche oder gleichartige Bauteile.

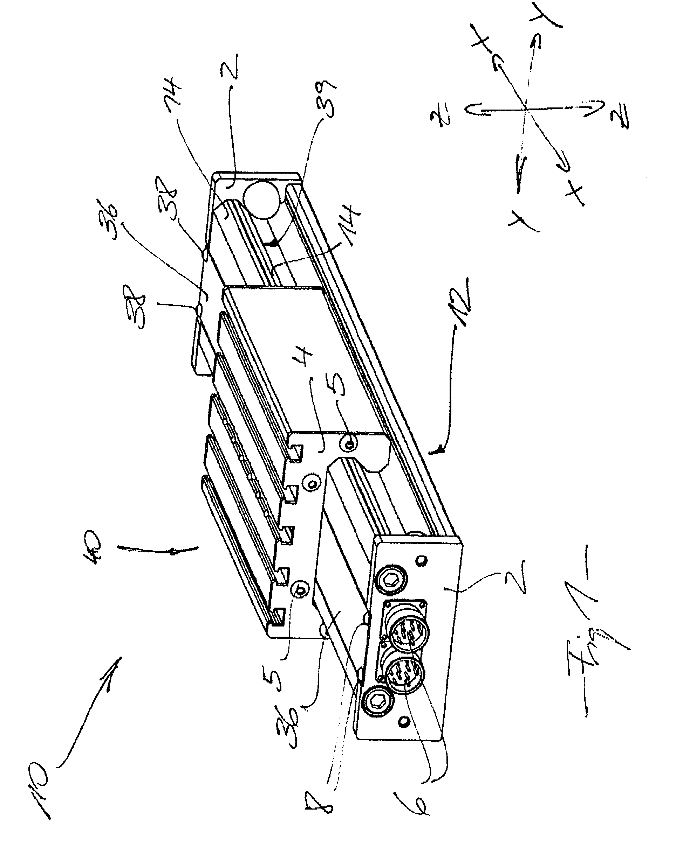

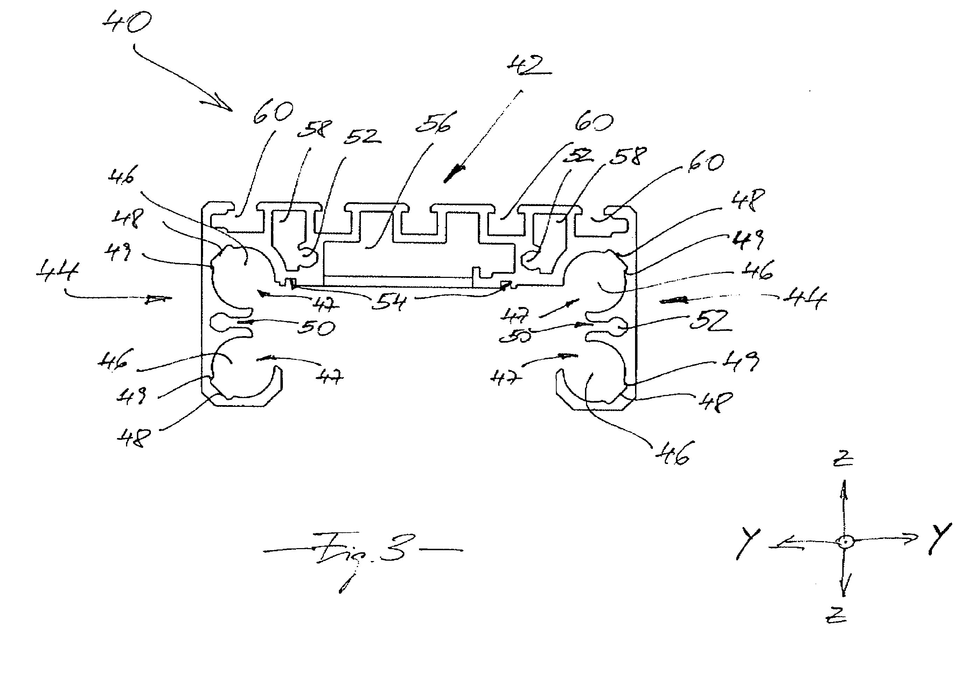

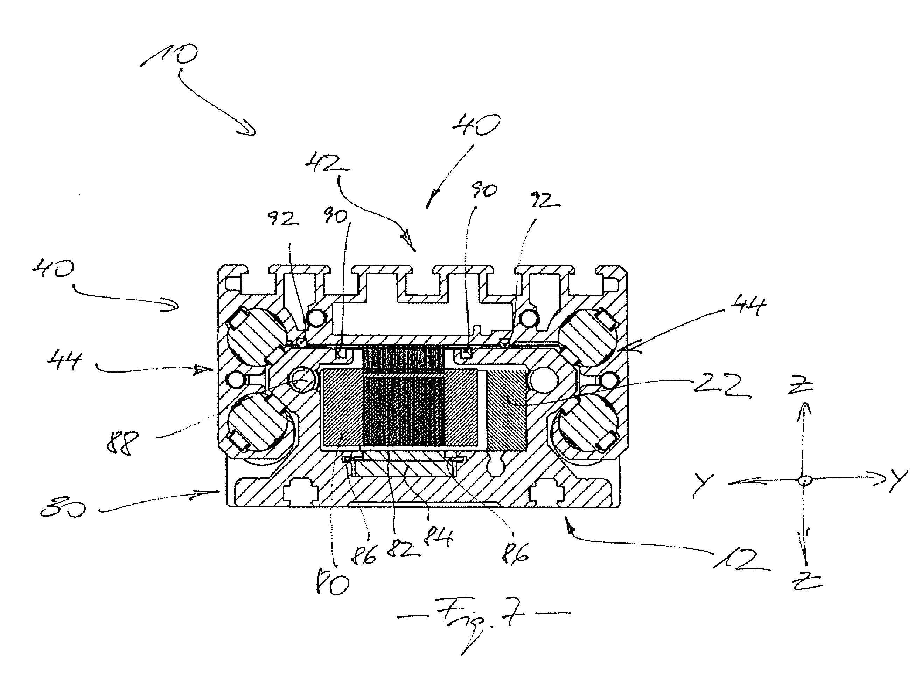

Fig. 1 zeigt eine erste bevorzugte Ausführungsform einer erfindungsgemäßen Lineareinheit 10, die eine Führungsschiene 12 und einen auf der Führungsschiene 12 verfahrbaren Schlitten 40 aufweist. Der Schlitten 40 ist im Wesentlichen u-förmig ausgestaltet und umfasst einen Querträgerabschnitt 42 und zwei seitliche Schenkelabschnitte 44 (Fig. 3), wobei die Abschnitte 42. 44 die Führungsschiene 12 teilweise umschließen (Fig.1 und 7). Zwischen der Führungsschiene 12 und dem Schlitten 40 ist eine spielfreie Lagerung angeordnet, die einerseits Lagerelemente und andererseits an der Führungsschiene 12 ausgebildete Lagerflächen 14 zur Abstützung und Führung der Lagerelemente aufweist. Erfindungsgemäß sind die Lagerelemente gegenüber der Führungsschiene 12 und dem Schlitten 40 zur spielfreien Einstellung der Lagerung drehbar angeordnet. In den Bohrungen 62, 64 der Schenkelabschnitte 44 angeordnete - hier nicht dargestellte - Schrauben aufweisende Einstellteile ermöglichen denkbar einfach eine spielfreie Einstellung der Lagerung mittels einer Kraftaufbringung in zur Längsachse X-X der jeweiligen Schenkelabschnitte 44 senkrechter Richtung Z-Z.

Der Antrieb der in Fig. 1 dargestellten erfindungsgemäßen Lineareinheit 10 erfolgt elektromotorisch mittels eines Linearmotors, der zwischen der Führungsschiene 12 und dem Schlitten 40 angeordnet ist und einen Spulenkörper 80 und einen Permanentmagneten 82 aufweist (Fig. 7). Der Spulenkörper 80 ist dabei an dem Schenkelabschnitt 44 des Schlittens 40 befestigt und erstreckt sich über eine Öffnung 34 der unsymmetrisch ausgestalteten Führungsschiene 12 in einen sich über die gesamte Länge der Führungsschiene 12 erstreckenden Aufnahmeraum 16 derselben. Der Permanentmagnet 82 hingegen, der sich über die gesamte Länge der Führungsschiene 12 erstreckt, ist in Verbindung mit einem Distanzstück 84 der gleichen Länge im Sockel 30 der Führungsschiene 12 in einer Ausnehmung 18 gegenüber liegend zur Öffnung 34 derart angeordnet, dass der Spulenkörper 80 und die Führungsschiene 12 durch einen Luftspalt von einander beabstandet sind. Mittels zweier Flansche 86 des Distanzstücks 84, die sich seitlich von demselben in die Nuten 20 der Ausnehmung 18 und über die gesamte Länge der Führungsschiene 12 erstrecken, ist der Permanentmagnet 82 gegenüber der Führungsschiene 12 ausreichend fixiert.

Die Funktionsweise des Linearmotors als solchem ist dem Fachmann bekannt und wird daher nachfolgend nicht erläutert.

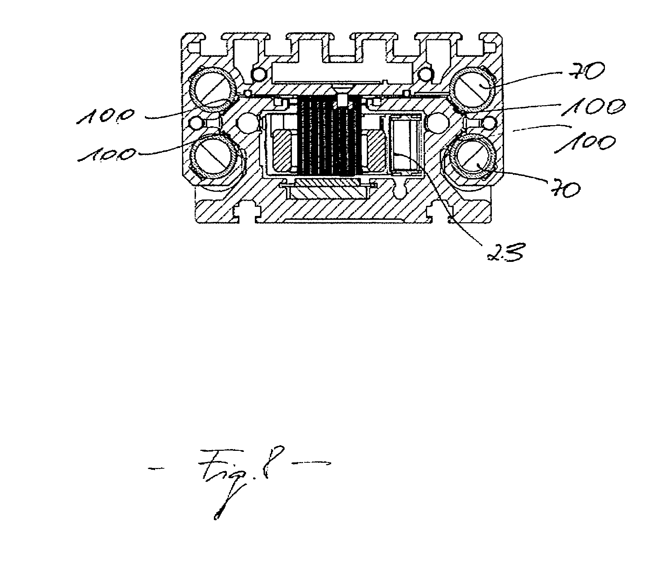

Der Aufnahmeraum 16 ist dabei derart unsymmetrisch ausgestaltet, dass er zusätzlich einen seitlichen Freiraum 22 einschließt, in dem die den Versorgungsstrang für den Linearmotor und einen - hier nicht dargestellten - Sensor zur Positionserfassung des Schlittens 40 bildenden flexiblen elektrischen Kabel in einer Energiekette 23 (Fig. 8) untergebracht sind, die als solche die Kabel stützt und führt. In der dem Freiraum 22 gegenüber liegenden Ausnehmung 24 der Führungsschiene 12 ist vorzugsweise ein Gewindestab 88 mit einem Trapezgewinde angeordnet, der zusammen mit dem - hier nicht dargestellten Sensor ein einfaches und kostengünstiges Sensormodul als integralen Bestandteil der erfindungsgemäßen Lineareinheit bildet. Die beiden Ausnehmungen 24 erstrecken sich dabei über die gesamte Länge der Führungsschiene 12 und dienen an den beiden Enden derselben zugleich als Aufnahmen für Schrauben 8, mittels derer die jeweiligen Stirnseiten der Führungsschienen 12 mit einer entsprechenden Platte 2 abgedeckt sind. Eine sich über die gesamte Länge der Führungsschiene 12 erstreckende Ausnehmung 26 im Sockel 30 der Führungsschiene 12 hingegen dient der Aufnahme und Führung der - hier nicht dargestellten - Anschlusskabel der elektrischen Anschlüsse 6 der erfindungsgemäßen Lineareinheit 10 an einem der beiden Enden derselben.

Ein Abdeckband 36 aus Metall verschließt die Öffnung 34 der Führungsschiene 12 und ist dabei an den jeweiligen Enden der Führungsschiene 12 mit einer Abdeckplatte 2 mittels Schrauben 38 verbunden, In zu beiden Seiten der Öffnung 34 in der Führungsschiene 12 angeordneten und sich über die gesamte Länge der Führungsschiene 12 erstreckenden Nuten 32 befinden sich je ein Magnetstreifen 90, der das metallische Abdeckband 36 mit der Führungsschiene 12 lösbar verbindet. Das Abdeckband 36 erstreckt sich dabei durch eine Kammer 56 der insgesamt drei Kammern 56, 58 des Querträgerabschnitts 44 der Führungsschiene 12, wobei in einem schlittennahen Bereich das Abdeckband 36 von den beiden Magnetstreifen 90 gelöst ist, so dass bei der Bewegung des Schlittens 40 das Abdeckband 36 in dem schlittennahen Bereich von den beiden Magnetstreifen 90 gelöst und durch die Kammer 56 geführt wird. Die beiden seitlich zur Kammer 56 angeordneten Kammern 58 dienen hauptsächlich der Reduktion des Eigengewichts des Schlittens 40.

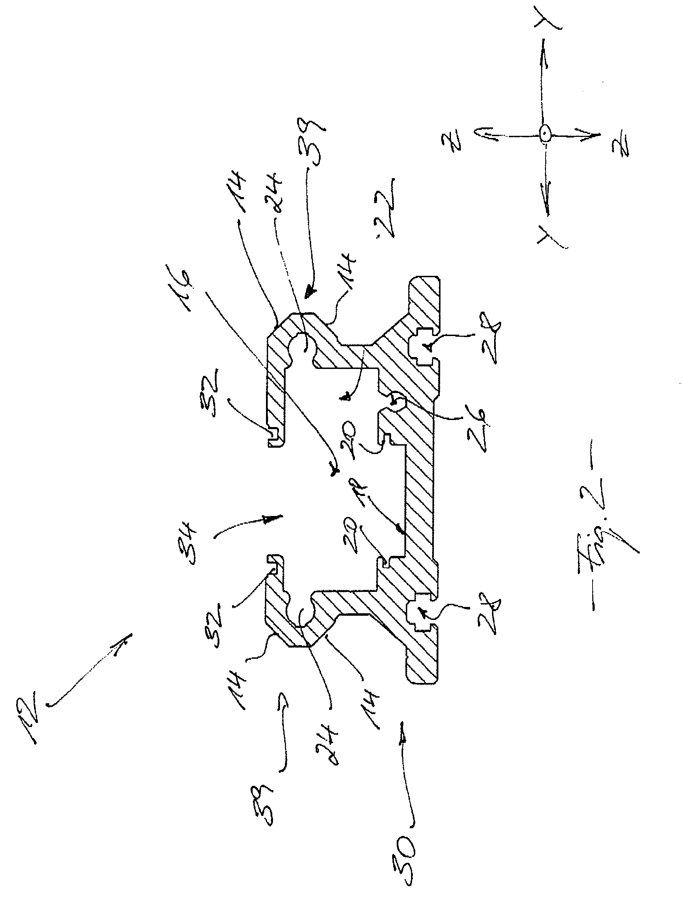

In dem von dem Schlitten 40 umschlossenen Bereich weist die Führungsschiene 12 zwei seitliche Vorsprünge 39 auf (Fig. 2), die jeweils zwei Lagerflächen 14 aufweisen und von einem der beiden Schenkelabschnitte 44 des Schlittens 40 umschlossen sind, wobei die beiden Lagerflächen 14 bezogen auf die Führungsschiene 12 einen Winkel von vorzugsweise 270° einschließen. Die Lagerflächen 14 sind dabei zweckmäßigerweise mit einer Hartbeschichtung versehen.

Nuten 28 an einer dem Schlitten 40 abgewandten Seite des Sockels 30 der Führungsschiene 12, die sich über die gesamte Länge der Führungsschiene 12 erstrecken, ermöglichen die Befestigung der Führungsschiene 12 an einer gewünschten Stelle.

In je einer Nut 54 zu beiden Seiten der Öffnung 34 der Führungsschiene 12 an der Innenseite des Querträgerabschnitts 42 des Schlittens 40 ist eine Dichtung 92 eingesetzt, die den Schlitten 40 und die Führungsschiene 12 gegeneinander abdichtet. An der Außenseite weist der Querträgerabschnitt 42 t-förmige Nuten 60 auf, die beispielsweise die Befestigung einer - hier nicht dargestellten - geschliffenen Stahlplatte zur Aufnahme von Werkzeugen oder Werkstücken ermöglichen.

Die seitlichen Schenkelabschnitte 44 des Schlittens 40 weisen jeweils zwei sich über die gesamte Länge des Schlittens 40 erstreckende Aufnahmen 46 mit einem im Wesentlichen kreisrunden Querschnitt auf. An der Innenseite der Schenkelabschnitte 44 weisen die Aufnahmen 46 je eine Öffnung 47 auf, die sich auch über die gesamte Länge des Schlittens 40 erstreckt. Gegenüber liegend zu den jeweiligen Öffnungen 47 ist eine sich ebenfalls über die gesamte Länge des Schlittens 40 erstreckende Nut 49 ausgebildet, die eine weitere Lagerfläche 48 bereitstellt, In den Aufnahmen 46 sind jeweils ein oder zwei Lagerelemente angeordnet, die vorzugsweise zweiteilig stabförmige Halteelemente 70 mit einem im Wesentlichen kreisrunden Querschnitt umfassen.

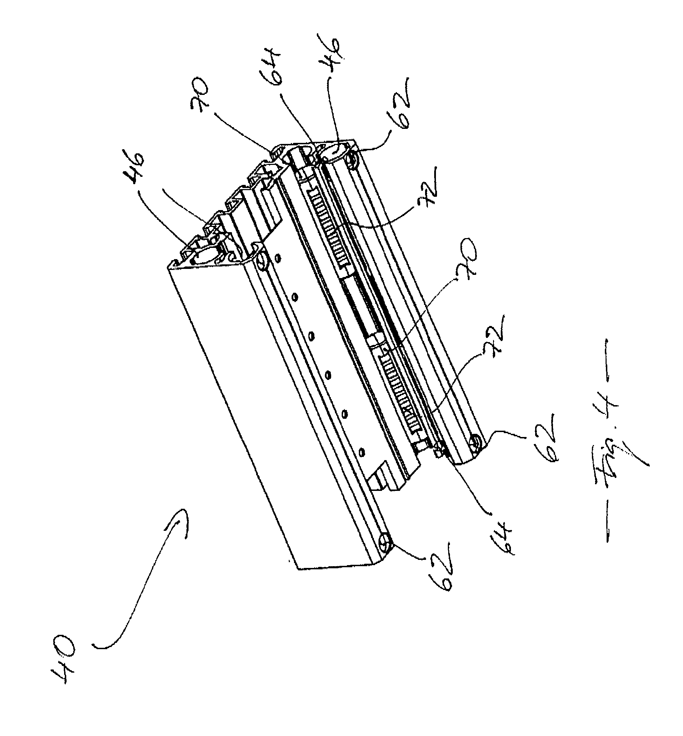

Nach der in der Fig. 4 dargestellten Ausführungsform des Schlittens 40 sind in den Aufnahmen 46 je zwei zueinander beabstandete Halteelemente 70 angeordnet, die vorzugsweise mit zwei diametral angeordneten, mit Fett geschmierten Wälzkörperreihen versehen sind, die sich einerseits über die Öffnung 47 an der Lagerfläche 14 der Führungsschiene 12 und andererseits gegen die Lagerfläche 48 in den Nuten 49 des Schlittens 40 abstützen. Die Wälzkörper der Wälzkörperreihen sind dabei vorzugsweise als Rollen ausgebildet. Es sei jedoch bemerkt, dass auch Kugeln oder Nadeln als Wälzkörper der Wälzkörperreihen in Frage kommen.

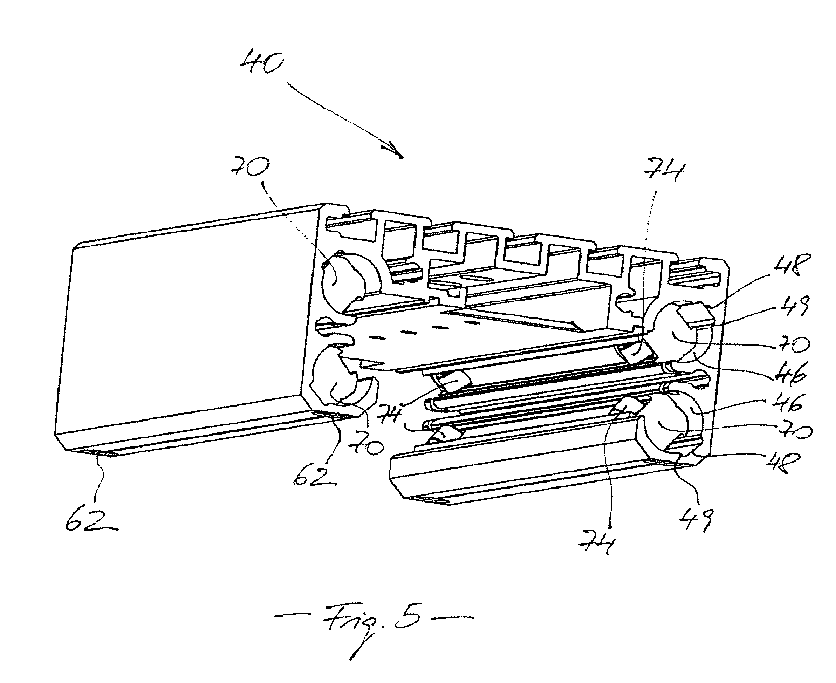

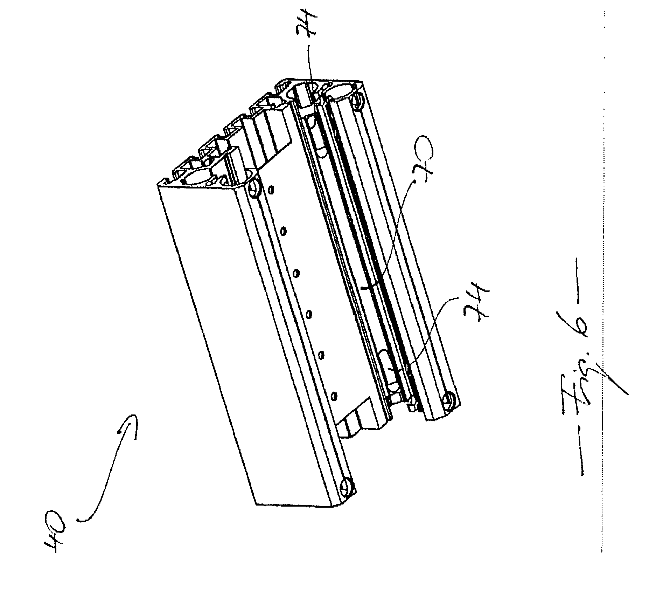

Hingegen ist nach der in den Fig. 5 und 6 dargestellten Ausführungsform des Schlittens 40 in den Aufnahmen 46 nur jeweils ein Halteelement 70 angeordnet, das im Bereich der Enden des Schlittens vorzugsweise mit je einer mit Fett geschmierten Laufrolle 74 versehen ist, die sich durch eine entsprechende rechteckförmige Ausnehmung im Halteelement 70 erstreckt und gegen die beiden Lagerflächen 14, 48 abstützt.

In den beiden Schenkelabschnitten 44 des Schlittens 40 ist zwischen den Aufnahmen 46 je ein zur Innenseite der Schenkelabschnitte hin geöffneter Spalt 50 vorgesehen, der zur Schenkelaußenseite hin durch eine Ausnehmung 52 aufgeweitet ist. Diese beiden Spalte 50 und Ausnehmungen 52 verleihen den Schenkelabschnitten 44 eine gewisse die Verformung derselben ermöglichende Flexibilität zum Zweck der spielfreien Lagereinstettung. Zwei weitere in dem Querträgerabschnitt 42 zu beiden Seiten der Kammer 56 ausgebildete und gegenüber den Kammern 58 offene Ausnehmungen 52 dienen zusammen mit den beiden Ausnehmungen 52 der Schenkelabschnitte 44 an den beiden Enden des Schlittens 40 als Aufnahmen für Schrauben 5. mittels derer die jeweiligen Stirnseiten des Schlittens 40 mit einer entsprechenden Platte 4 abgedeckt sind.

Nach der in der Fig. 8 dargestellten Querschnittsansicht einer zweiten Ausführungsform der erfindungsgemäßen Lineareinheit 10 sind die beiden Vorsprünge 39 der Führungsschiene 12 jeweils mit zwei Stahlblechen 100 derart versehen, dass die Stahlbleche 100 die Lagerflächen 14 bilden. Dabei ist an den jeweiligen Flächen der Führungsschiene 12 eine Nut 15 vorgesehen, in die das Stahlblech 100 eingelegt ist. Die Stahlbleche 100 können entweder stoff- oder formschlüssig an den Flächen der Führungsschiene befestigt sein, wobei im ersteren Fall eine Verklebung, Verlötung oder Verschweißung denkbar ist, während im letzteren Fall die Stahlbleche 100 in die Nuten eingerollt sind.

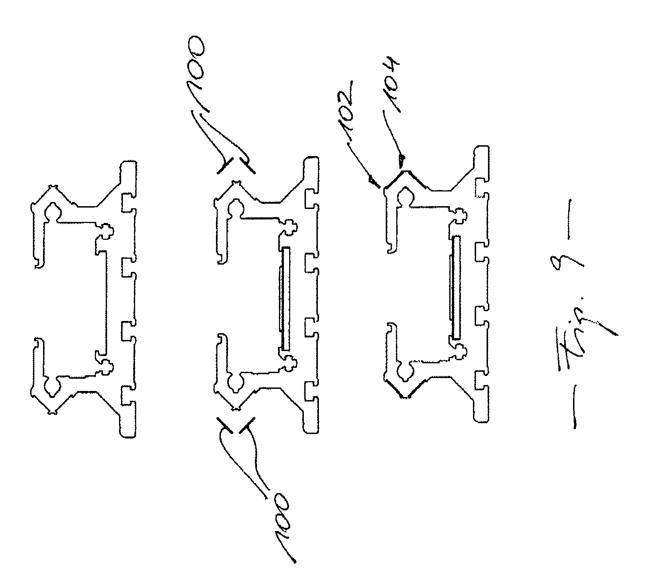

Zum Einrollen der Stahlbleche 100 weisen die Nuten 15 der Vorsprünge 39 jeweils auf einer Seite eine schwalbenschwanzartige Hinterscheidung 102 und auf der anderen Seite eine durch das Rollen zu verformende Bördel 104 auf, die dazu dient, das Stahlblech 100 zu verklemmen (Fig. 9).

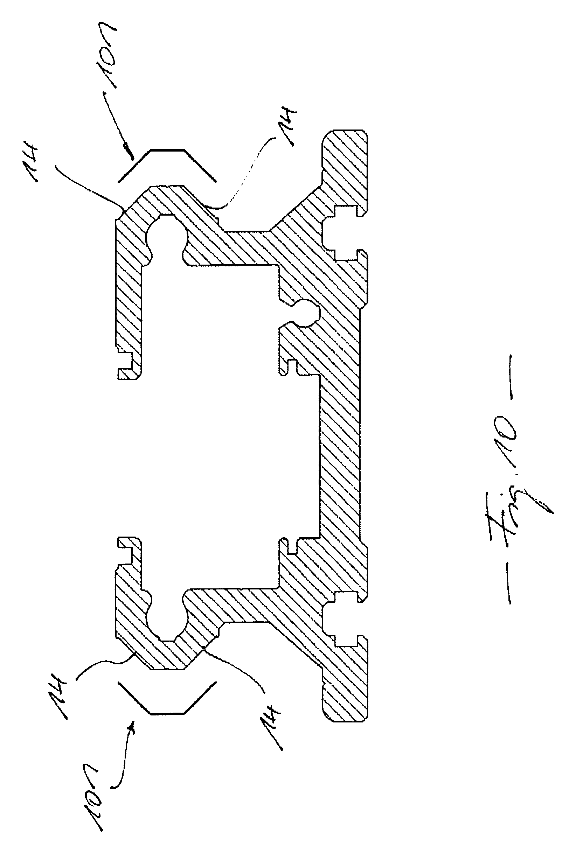

Alternativ dazu kann die Führungsschiene 12 nach einer dritten Ausführungsform der erfindungsgemäßen Lineareinheit 10 (Fig. 10) an den beiden Vorsprüngen 39 mit einem bereichsweise gebogenen, die beiden Lagerflächen 14 bildenden Stahlblech 101 versehen sein, das zu der Form des Vorsprungs 39 korrespondiert und denselben umschtießt. Dabei sind die Stahlbleche 101 mit der Führungsschiene 12 vorzugsweise stoffschlüssig verbunden.

In den in den Fig. 1 bis 10 dargestellten Ausführungsformen der erfindungsgemäßen Lineareinheit 10 sind jeweils die Schlitten 40 als das bewegliche Teil der Lineareinheit 10 konzipiert. Dies entspricht den grundsälzlich üblichen Anwendungen derartiger Schlitten, die durchaus auch mehrere Schlitten 40 umfassen können. Es sei jedoch bemerkt, dass bei diesen Ausführungsformen auch eine Invertierung des Bewegungskonzepts und somit eine Anwendung denkbar ist, bei der die Schiene 12 als das bewegliche Teil der Lineareinheit 10 fungiert.

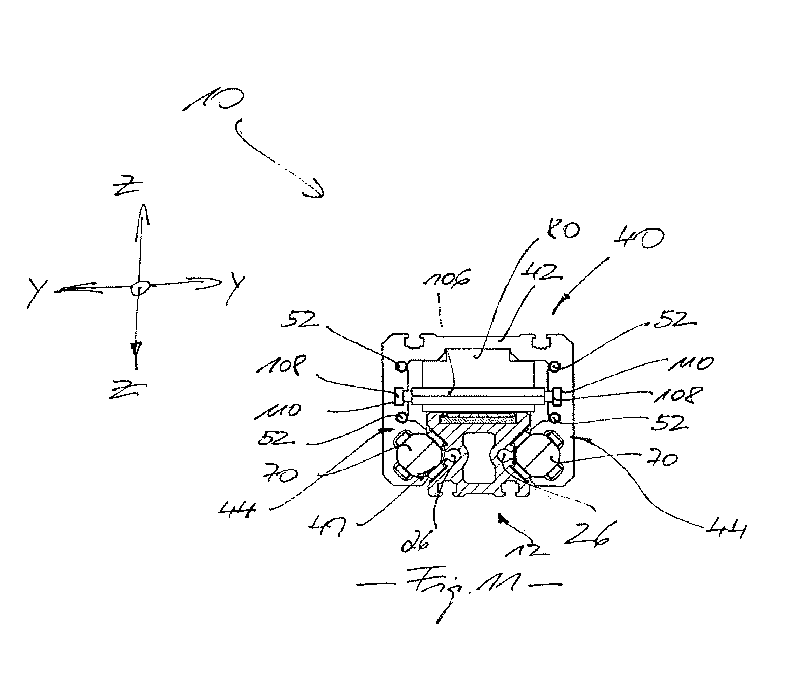

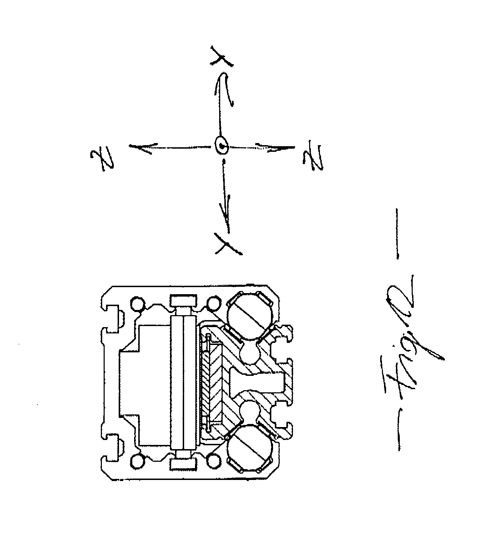

Die Fig. 11 und 12 hingegen zeigen eine vierte und fünfte Ausführungsform der erfindungsgemäßen Lineareinheit 10 mit einer als beweglichem Teil derselben konzipierten Führungsschiene 12. Die Führungsschiene 12 ist, anders als bei den vorangegangen beschriebenen Ausführungsformen (Fig. 1 bis 10), zweckmäßigerweise symmetrisch ausgestaltet und nimmt lediglich den Permanentmagneten 82 des Linearmotors in einer Ausnehmung 18 auf, die an einer dem Sockel 30 der Führungsschiene 12 gegenüber liegenden Seite derselben angeordnet ist. In dem von dem Schlitten 40 umschlossenen Bereich weist die Führungsschiene 12 zwei seitliche Rücksprünge 41 auf, die jeweils mit zwei die Lagerflächen 14 bildenden Nuten versehen sind, in die je ein Stahlblech 100, wie zuvor in Bezug auf die Fig. 9 beschrieben, eingerollt ist. Die Lagerflächen 14 schließen dabei bezogen auf die Führungsschiene 12 einen Winkel von vorzugsweise 90° ein. Zwischen den Lagerflächen 14 an der tiefsten Stelle des jeweiligen Rücksprungs 41 ist in der Führungsschiene 12 eine Ausnehmung 26 ausgebildet, die sich zur Aufnahme eines - hier nicht dargestellten - Gewindestabs eignet, der den Bestandteil eines einfachen und kostengünstigen Sensormoduls zur Positionserfassung des Schlittens bildet. Ein entsprechender zum Sensormodul gehörender Sensor könnte zu diesem Zweck an dem Schlitten 40 befestigt sein.

Der an dem Querträgerabschnitt 42 des Schlittens 40 befestigte Spulenkörper 80 des Linearmotors ist dabei gegenüber den vorangegangen beschriebenen Ausführungsformen (Fig. 1 bis 10) nicht innerhalb, sondern vielmehr außerhalb der Führungsschiene 12 zwischen derselben und dem Schlitten 40 angeordnet. Die beiden Schenkelabschnitte 44 des Schlittens 40 weisen jeweils eine im Wesentlichen halbkreisrund ausgebildete und sich über die gesamte Länge des Schlittens 40 erstreckende Aufnahme 46 auf, die am dem Querträgerabschnitt 42 abgewandten Ende des Schenkelabschnitts 44 vorgesehen ist. Dabei sind in den Aufnahmen 46 je zwei sich über die gesamte Länge des Schlittens 40 erstreckende und die Lagerflächen 48 bildende Nuten 49 vorgesehen, wobei die lagerflächen 48 bezogen auf den jeweiligen Schenkelabschnitt 44 vorzugsweise in einem Winkel von 90° zueinander angeordnet sind. Ferner ist in jeder der beiden Aufnahmen 46 ein vorzugsweise zweiteilig stabförmiges Halteelement 70 mit einem im Wesentlichen kreisrunden Querschnitt angeordnet, an dessen Enden vorzugsweise je zwei überkreuzt und hinter einander angeordnete, mit Fett geschmierte Laufrollen 74 vorgesehen sind, die sich durch entsprechende rechteckförmige Ausnehmungen im Halteelement 70 erstrecken und gegen die Lagerflächen 14, 48 der Führungsschiene 12 und der Aufnahme 46 abstützen. Die beiden Laufrollen 74 bilden dabei korrespondierend zur Anordnung der Lagerflächen 14, 48 einen Kreuzungswinkel von vorzugsweise 90°.

Ferner sind in jedem der beiden Schenkelabschnitte 44 zwischen der Aufnahme 46 und dem Querträgerabschnitt 42 zwei Spalte bzw. Ausnehmungen 52 vorgesehen, von denen eine zweckmäßigerweise im Übergangsbereich zwischen dem Schenkelabschnitt 44 und dem Querträgerabschnitt 42 angeordnet ist. Die beiden Ausnehmungen 52 verleihen den Schenkelabschnitten 44 eine gewisse die Verformung derselben ermöglichende Flexibilität zum Zweck der spielfreien Lagereinstellung. Darüber hinaus ist in jedem der beiden Schenkelabschnitte 44 zwischen den beiden Ausnehmungen 52 eine zur Schenkelinnenseite hin offene, vorzugsweise t-förmige Nut 110 vorgesehen, die sich über die gesamte Länge des Schenkelabschnitts 44 erstreckt. Zu beiden Seiten des Spulenkörpers 80 im Schlitten 40 und quer zu dessen Längsachse X-X angeordnete, längliche Sechskante 106 greifen über jeweils zwei Sechskantschrauben 108, die in deren Enden eingedreht sind, in die Nut 110. Die Sechskante 106 fungieren dabei als Einstellteile, die denkbar einfach eine spielfreie Einstellung der Lagerung mittels einer Kraftaufbringung in zur Längsachse X-X der jeweiligen Schenkelabschnitte 44 wagrechter Richtung Y-Y ermöglichen.

Die in den Fg. 11 und 12 dargestellten Ausführungsformen der erfindungsgemäßen Lineareinheit 10 eignen sich insbesondere für senkrechte Anordnungen derselben, die auch mehrere Schlitten 40 umfassen können. Die kompakte Ausgestaltung der beweglichen Profilschiene 12 reduziert dabei das Gewicht und die Massenträgheit derselben. Dies reduziert auch den für den Antrieb der beweglichen Profilschiene 12 benötigten Energieaufwand.

Allen vorangegangen beschriebenen Ausführungsformen der erfindungsgemäßen Lineareinheit 10 ist gemein, dass sowohl die Führungsschiene 12 als auch der Schlitten 40 als vorzugsweise einteilige Stranggußprnfüe aus Aluminium ausgebildet sind.

Ferner ist die erfindungsgemäße Lineareinheit 10 in einer weiteren - hier nicht dargestellten - Ausführungsform mit einer vorzugsweise als Wirbelstrombremse ausgebildeten Bremseinheit als integralem Bestandteil der Lineareinheit 10 versehen. Die Bremseinheit dient dazu, den Schlitten 40 abzubremsen oder in einer erreichten Stellung zu arretieren.

Allen vorangegangen beschriebenen Ausführungsformen der erfindungsgemäßen Lineareinheit 10 liegt ein einfacher und kostengünstiger Aufbau zugrunde, der eine einfache und schnelle Anpassung der Lineareinheit 10 an die unterschiedlichsten Anforderungen ermöglicht.

Die erfindungsgemäß drehbare Ausgestaltung der Lagerelemente sorgt dafür, dass sich die Lagereleniente bei der Einstellung der Lagerung mittels der Einstellteile selbsttätig gegenüber den entsprechenden Lagerflächen 14, 48 ausrichten. Fig. 12 veranschaulicht die Verdrehung der Lagerelemente gegenüber dem Schlitten 40 und der Führungsschiene 12.

Sowohl das Konzept mit der im Innern der Führungsschiene 12 geführten Energiekette (Fig. 1 bis 10) als auch das Konzept mit der angetriebenen Führungsschiene 12 (Fig. 11 und 12) arbeiten in Verbindung mit der diesen beiden Konzepten zugrunde liegenden innen liegenden Lagerung selbst bei hohen Geschwindigkeiten extrem leise.

### Bezugszeichenliste

- X-X: Längsachse
- Y-Y: Querachse
- Z-Z: Hochachse

- 2: Abdeckplatte
- 4: Abdeckplatte
- 5: Schraube
- 6: elektrische Anschlüsse
- 8: Schraube
- 10: Lineareinheit
- 12: Führungsschiene
- 14: Lagerfläche
- 15: Nut
- 16: Aufnahmeraum
- 18: Ausnehmung
- 20: Nut
- 22: Freiraum
- 24: Ausnehmung
- 26: Ausnehmung
- 28: Nut
- 30: Sockel
- 32: Nut
- 34: Öffnung
- 36: Abdeckband
- 38: Schraube
- 39: Vorsprung
- 40: Schlitten
- 44: Rücksprünge
- 42: Querträgerabschnitt
- 44: Schenkelabschnitt
- 46: Aufnahme
- 48: Lagerfläche
- 50: Spalt
- 52: Ausnehmung
- 54: Nut
- 56: Kammer
- 58: Kammer
- 60: Nut
- 62: Bohrung
- 64: Bohrung
- 70: Halteelement
- 72: Rollenkette
- 74: Rolle
- 80: Spulenkörper
- 82: Permanentmagnet
- 84: Distanzstück
- 86: Flansch
- 88: Gewindestab
- 90: Magnetstreifen
- 92: Dichtung
- 100: Stahlblech
- 101: Stahlblech
- 102: Schwalbenschwanzteil einer Nut
- 104: Bördel
- 106: Sechskant
- 108: Sechskantschraube
- 110: Nut

## Patentansprüche

1. Lineareinheit mit
■ mindestens einer Führungsschiene (12),
■ mindestens einem auf der Führungsschiene (12) verfahrbaren Schlitten (40), der im Wesentlichen u-förmig ausgebildet ist und einen Querträgerabschnitt (42) und zwei seitliche Schenkelabschnitte (44) umfasst, wobei die Abschnitte (42, 44) die Führungsschiene (12) teilweise umschließen,
■ einer zwischen der Führungsschiene (12) und dem Schlitten (40) angeordneten spielfreien Lagerung, die mindestens zwei Lagerelemente und mindestens zwei an der Führungsschiene (12) ausgebildete Lagerflächen (14) zur Abstützung und Führung der Lagerelemente aufweist, und
■ Mitteln zur spielfreien Einstellung der Lagerung,
**dadurch gekennzeichnet, dass** die Lagerelemente derart ausgestaltet sind, dass sie gegenüber der Führungsschiene (12) und dem Schlitten (40) zur spielfreien Einstellung der Lagerung drehbar sind.

2. Lineareinheit nach Anspruch 1, **dadurch gekennzeichnet, dass** die Führungsschiene (12) in dem von dem Schlitten (40) umschlossenen Bereich zwei seitliche Vorsprünge (39) oder Rücksprünge (41) aufweist, die jeweils von einem der beiden Schenkelabschnitte (44) des Schlittens (40) umschlossen sind und mindestens eine der Lagerflächen (14) aufweisen.

3. Lineareinheit nach Anspruch 2, **dadurch gekennzeichnet, dass** die beiden Vorsprünge (39) jeweils zwei Lagerflächen (14) aufweisen, die bezogen auf die Führungsschiene (12) einen Winkel von vorzugsweise 270° einschließen.

4. Lineareinheit nach Anspruch 2, **dadurch gekennzeichnet, dass** die beiden Rücksprünge (41) jeweils zwei Lagerflächen (14) aufweisen, die bezogen auf die Führungsschiene (12) einen Winkel von vorzugsweise 90° einschließen.

5. Lineareinheit nach einem der Ansprüche 1 bis 4, **dadurch gekennzeichnet, dass** die Lagerflächen (14) mit einer Hartbeschichtung versehen sind.

6. Lineareinheit nach einem der Ansprüche 1 bis 4, **dadurch gekennzeichnet, dass** die Lagerflächen (14) mit mindestens einem Stahlblech (100) versehen sind.

7. Lineareinheit nach einem der Ansprüche 1 bis 3, **dadurch gekennzeichnet, dass** an den beiden Vorsprüngen (39) jeweils mindestens ein bereichsweise gebogenes Stahlblech (101) befestigt ist, das die Lagerflächen (14) bildet.

8. Lineareinheit nach Anspruch 6 oder 7, **dadurch gekennzeichnet, dass** die Stahlbleche (100, 101) mit der Führungsschiene (12) stoffschlüssig verbunden sind.

9. Lineareinheit nach Anspruch 6 oder 7, **dadurch gekennzeichnet, dass** die Stahlbleche (100, 101) mit der Führungsschiene (12) formschlüssig verbunden sind.

10. Lineareinheit nach Anspruch 9, **dadurch gekennzeichnet, dass** die Lagerflächen (14) jeweils eine Nut (15) aufweisen, in die das Stahlblech (100) eingerollt ist.

11. Lineareinheit nach Anspruch 10, **dadurch gekennzeichnet, dass** die Nut (15) auf einer Seite eine schwalbenschwanzartige Hinterscheidung (102) und auf der anderen Seite eine durch das Rollen verformte und das Stahlblech (100) verklemmende Bördel (104) aufweist.

12. Lineareinheit nach einem der Ansprüche 1 bis 11, **dadurch gekennzeichnet, dass** die Führungsschiene (12) unsymmetrisch ausgestaltet ist und einen sich über die gesamte Länge der Führungsschiene (12) erstreckenden Aufnahmeraum (16) für den Spulenkörper (80) eines Linearmotors bildet, wobei die Öffnung (34) des Aufnahmeraums (16) an der dem Querträgerabschnitt (42) des Schlittens (40) zugewandten Seite der Führungsschiene (12) angeordnet ist.

13. Lineareinheit nach Anspruch 12, **dadurch gekennzeichnet, dass** der Aufnahmeraum (16) derart ausgestaltet ist, dass er zusätzlich einen seitlichen Freiraum (22) zur Aufnahme eines Versorgungsstrangs (23) für den Linearmotor und einen Sensor zur Positionserfassung des Schlittens (40) einschließt.

14. Lineareinheit nach Anspruch 12 oder 13, **dadurch gekennzeichnet, dass** in der Führungsschiene (12) gegenüber liegend zur Öffnung (34) des Aufnahmeraums (16) eine sich über die gesamte Länge der Führungsschiene (12) erstreckende Ausnehmung (18) zur Aufnahme mindestens eines Permanentmagneten (82) des Linearmotors vorgesehen ist.

15. Lineareinheit nach einem der Ansprüche 1 bis 11, **dadurch gekennzeichnet, dass** die Führungsschiene (12) symmetrisch ausgestaltet ist und an der dem Querträgerabschnitt (42) des Schlittens (40) zugewandten Seite eine sich über die gesamte Länge der Führungsschiene (12) erstreckende Ausnehmung (18) zur Aufnahme mindestens eines Permanentmagneten (82) des Linearmotors vorgesehen ist.

16. Lineareinheit nach einem der Ansprüche 1 bis 15, **dadurch gekennzeichnet, dass** die seitlichen Schenkelabschnitte (44) des Schlittens (40) jeweils mindestens eine sich über die gesamte Länge des Schlittens (40) erstreckende Aufnahme (46) für eines der Lagerelemente aufweisen, wobei die Aufnahme (46) an der Innenseite des jeweiligen Schenkelabschnitts (44) eine Öffnung (47) aufweist, die sich über die gesamte Länge des Schlittens (40) erstreckt.

17. Lineareinheit nach Anspruch 16, **dadurch gekennzeichnet, dass** die Aufnahme (46) einen im Wesentlichen kreisrunden oder halbkreisrunden Querschnitt aufweist.

18. Lineareinheit nach Anspruch 16 oder 17, **dadurch gekennzeichnet, dass** in den jeweiligen Aufnahmen (46) mindestens eine weitere Lagerfläche (48) zur Abstützung und Führung der Lagerelemente vorgesehen ist, vorzugsweise gegenüber liegend zu der entsprechenden Öffnung (47).

19. Lineareinheit nach Anspruch 18, **dadurch gekennzeichnet, dass** in den jeweiligen Aufnahmen (46) zwei Lagerflächen (48) vorgesehen sind, wobei die beiden Lagerflächen (48) bezogen auf den jeweiligen Schenkelabschnitt (44) des Schlittens (40) vorzugsweise in einem Winkel von 90° zueinander angeordnet sind.

20. Lineareinheit nach einem der Ansprüche 1 bis 19, **dadurch gekennzeichnet, dass** in den beiden Schenkelabschnitten (44) des Schlittens (40) jeweils mindestens ein zur Schenkelinnenseite hin geöffneter Spalt (50) vorgesehen ist, der zur Schenkelaußenseite hin ein Aufweitung (52) aufweist.

21. Lineareinheit nach Anspruch 20, **dadurch gekennzeichnet, dass** die beiden Schenkelabschnitte (44) ferner mit senkrecht zu den Längsachsen derselben angeordneten Bohrungen (62, 64) zur Aufnahme von Spannmitteln zur Einstellung der Lagerung versehen sind.

22. Lineareinheit nach Anspruch 20, **dadurch gekennzeichnet, dass** ferner in den jeweiligen Übergangsbereichen des Schlittens (40) zwischen den Schenkelabschnitten (44) und dem Querträgerabschnitt (42) mindestens ein weiterer zur Schenkelinnenseite hin geöffneter Spalt vorgesehen ist.

23. Lineareinheit nach Anspruch 22, **dadurch gekennzeichnet, dass** in den beiden Schenkelabschnitten (44) des Schlittens (40) jeweils zwischen den beiden Spalten mindestens eine sich über die gesamte Länge der Schenkelabschnitte (44) erstreckende und zur Schenkelinnenseite hin offene Nut (110) vorgesehen ist.

24. Lineareinheit nach einem der Ansprüche 1 bis 23, **dadurch gekennzeichnet, dass** die Lagerelemente stabförmige Halteelemente (70) mit einem im Wesentlichen kreisrunden Querschnitt aufweisen.

25. Lineareinheit nach Anspruch 24, **dadurch gekennzeichnet, dass** die Lagerelemente ferner mindestens zwei Wälzkörperreihen aufweisen, die sich gegen die Lagerflächen (14, 48) abstützen, wobei die Wälzkörper der Wälzkörperreihen als Kugeln, Rollen oder Nadeln ausgebildet sind.

26. Lineareinheit nach Anspruch 24, **dadurch gekennzeichnet, dass** die Lagerelemente ferner mindestens eine Laufrolle (74) aufweisen, die sich durch das Halteelement (70) erstreckt und gegen die Lagerflächen (14, 48) abstützt.

27. Lineareinheit nach Anspruch 26, **dadurch gekennzeichnet, dass** die Lagerelemente zwei überkreuzt und hinter einander angeordnete Laufrollen (74) aufweisen, die sich gegen die Lagerflächen (14, 48) abstützen, wobei die Laufrollen (74) einen Kreuzungswinkel von vorzugsweise 90° bilden.

28. Lineareinheit nach einem der Ansprüche 1 bis 27, **dadurch gekennzeichnet, dass** die Mittel zur Einstellung der Lagerung mindestens ein senkrecht zum Querträgerabschnitt (42) des Schlittens (40) angeordnetes Einstellteil in je einem der beiden Schenkelabschnitte (44) desselben umfassen.

29. Lineareinheit nach einem der Ansprüche 1 bis 27, **dadurch gekennzeichnet, dass** die Mittel zur Einstellung der Lagerung mindestens ein senkrecht zu den beiden Schenkelabschnitten (44) des Schlittens (40) angeordnetes Einstellteil umfassen.

30. Lineareinheit nach Anspruch 29, **dadurch gekennzeichnet, dass** das Einstellteil einen länglich ausgebildeten Sechskant (106) mit Innengewinde bildet, an dessen Enden je eine Sechskantschraube (108) eingeführt ist.

31. Lineareinheit nach einem der Ansprüche 1 bis 30, **dadurch gekennzeichnet, dass** die Lineareinheit ferner einen zwischen der Führungsschiene (12) und dem Schlitten (40) angeordneten Linearmotor mit einem Spulenkörper (80) und mindestens einem Permanentmagneten (82) aufweist.

32. Lineareinheit nach einem der Ansprüche 1 bis 31, **dadurch gekennzeichnet, dass** die Lineareinheit ferner ein Sensormodul mit einem Gewindestab (88) und einem Sensor zur Positionserfassung des Schlittens (40) aufweist.

33. Lineareinheit nach einem der Ansprüche 1 bis 32, **dadurch gekennzeichnet, dass** die Lineareinheit ferner einen weiteren, als Bremseinheit fungierenden Linearmotor aufweist.
